# EUROPEAN PATENT SPECIFICATION

(11) **EP 3 877 599 B1**
(45) Date of publication and mention of the grant of the patent: **31.01.2024**
(21) Application number: 19832467.5
(22) Date of filing: 04.11.2019
(51) Int. Cl.: E04B 1/14, B29C 44/12, B32B 5/18, B32B 27/00, E04B 7/22, E04C 2/20, B29C 37/00

(54) **METHOD FOR MANUFACTURING A CONSTRUCTION PANEL**
VERFAHREN ZUR HERSTELLUNG EINER KONSTRUKTIONSPLATTE
PROCÉDÉ DE FABRICATION D'UN PANNEAU DE CONSTRUCTION

(30) Priority: 09.11.2018 NL 1043074
(43) Date of publication of application: 15.09.2021
(73) Proprietor: Rc Panels Holding B.V., 8152 GA Lemelerveld (NL)
(72) Inventor: KLEIN, Carlos, 8152 GA Lemelerveld (NL)
(74) Representative: Algemeen Octrooi- en Merkenbureau B.V.
(86) International application number: PCT/NL2019/050723
(87) International publication number: WO 2020/096450

(56) References cited:
- WO-A1-2018/139675
- WO-A1-2018/194465
- NL-C2- 1 040 849

## Description

The invention relates to a method for manufacturing a construction panel intended for use as a self-supporting wall panel or roof panel having a high R-value.

Such a construction panel is known, inter alia, from NL1040849C in the name of the applicant, where in particular the application of the rigid cover layers to the foamed insulating material is discussed. The present invention includes a further elaboration of what is disclosed in NL1040849C. The present invention also relates to a method for entirely industrially manufacturing construction panels, of which the structure and the applications are disclosed in more detail in another patent application of the applicant, which has as subject "Construction panel for use as self-supporting wall panel or roof panel".

According to the present invention a method is provided for manufacturing a construction panel intended for use as a self-supporting wall panel or roof panel having a high R-value, comprising the following steps:
- providing a digital construction data file with the desired construction data of the construction panel, obtained by scanning an existing building and/or obtained from a design (in particular with the aid of a digital design/drawing program);
- providing a device for manufacturing a construction panel comprising a base layer of foamed material of, for example, EPS, provided with a thin, rigid reinforcement cover layer on one side, hereinafter referred to as the first cover layer, and on the other side also provided with a thin, rigid reinforcement cover layer, hereinafter referred to as the second cover layer. The layers are either directly applied to the base layer (e.g. by gluing), or by means of an intermediate layer of a material, which is suitable for receiving screws,
- providing means, which are adapted for covering the transverse surfaces (side surfaces) of the construction panel,
wherein the transverse surfaces of the construction panel, not being covered by the cover layers, are covered with a layer of polyurea, polyester or epoxy (industrially) applied thereupon, which serves for hermetically sealing off the transverse surfaces not covered by the cover layers against environmental influences such as moisture, vermin, mechanical damage, etcetera.

The respective first and second cover layers (plates) can be made of, for example, fibre-reinforced, thermosetting plate material such as glass-fibre-reinforced polyester plate, but can also be made of OSB ("Oriented Strand Board"; https://en.wikipedia.org/wiki/Oriented_Beach_Board) or, in particular when using the construction panels according to the invention as roofing sheets, can be made of steel sheet.

In many cases, construction panels are sought-after that (must be) are covered with covering elements such as brick strips, giving the construction panels more the appearance of a traditionally built (masonry) outside wall. For the manufacture of such construction panels, the method according to the invention comprises the provision of means, which are arranged for applying (for example by gluing) covering elements, such as in particular brick strips, in a predetermined pattern to the first cover layer of the construction panel.

One or more delta robots (https://en.wikipedia.org/wiki/delta_robot) may be used for applying the covering elements to the first cover layer, which robots are capable of rapidly and very accurately providing covering elements in predetermined patterns on the (horizontal) construction panel which, for example by an adhesive layer previously applied to the construction panel, are adhered to the construction panel. The delta robots may, for example, be mounted on or assembled with an X-Y displacement system controllable from the digital construction data file, which system is located above the underlying construction panel and which is used to move the delta robot(s) to the designated areas, where the covering elements are provided.

Often, construction panels are required, that are provided with one or more recesses for e.g. a door or a window, wherein the method comprises the provision of means, which are adapted to provide such recesses in the material of the construction panel, as well as means adapted for covering the transverse surfaces of said recesses by applying thereupon a layer of polyurea, polyester or epoxy.

The required recesses may be profiled for the purpose of receiving and/or supporting a construction element to be placed and/or mounted into the recess, for example a windowpane, panel or (window or door) frame.

In that case, the method comprises the provision of means, which are adapted to provide one or more recesses in the construction panel, which recesses are profiled, as seen in cross-section, as well as means, which are arranged for covering the profiled transverse surfaces of said recesses by applying thereto a layer of polyurea, polyester or epoxy.

The means for accurately customizing/tailoring the construction panel at the factory and/or for providing the one or more profiled and/or non-profiled recesses into the construction panel, preferably comprise one or more robotic milling cutters and/or cutting devices, for example installed in or assembled with an X-Y displacement system controllable from the digital construction data file, which system is located above the underlying construction panel and which accurately and quickly positions and further controls the milling and/or cutting device(s).

The method according to the invention may comprise the provision of means that are arranged for slotting or milling of one or more portions of the outer surface of the base layer of foamed material and/or of the relevant cover layer, as well as may comprise means adapted to cover the surface of said one or more portions by applying thereto a layer of polyurea, polyester or epoxy. The result of this method is a construction panel with (partly) an external relief/profile with a decorative and/or functional purpose (for example as an integrated roof gutter), in which the slotted or milled portions are industrially provided with a layer of a polyurea, polyester, epoxy protective against environmental influences.

The method according to the invention may also comprise the provision of means that are arranged for covering a portion of the construction panel that is intended to be installed below ground level by applying a layer of polyurea, polyester or epoxy to that portion (on top of the already present cover layer). In this way, it is achieved that the construction panel is provided with an (additional) protective layer at the portion of the construction panel, that is positioned into the soil, below ground level. The extra protective layer of polyurea, polyester or epoxy serves as a substitute for a so-called "side board" which, in traditional building construction, is fitted against the bottom portion of an outside wall.

According to the invention, the means for applying a layer of polyurea, polyester or epoxy onto the transverse surfaces at the outer sides of the construction panel, respectively, onto the transverse surfaces, profiled or non-profiled, of the recesses in the construction panel, respectively, onto the one or more slotted or milled portions of the outer surface of the construction panel, respectively, onto a portion of the construction panel intended to be installed below ground level, preferably, comprise robotic spraying devices for polyurea, polyester or epoxy in sprayable state. The spraying devices may be mounted on or assembled with the X-Y displacement system above the construction panel during manufacture, the system being controllable from the construction data file.

The sprayable state of polyurea, polyester or epoxy is obtained, for example, by mixing and heating the polyurea, polyester or epoxy components during the spraying process ("hot spray"); see also https://en.wikipedia.org/wiki/Polyurea, https://www.youtube,com/watch?v=djCBkmPpZlc, http://www.kunststofcoatings.nl/materiaal-en-techniek/processing of polyurea/.

Summarized, the present invention provides a method by which construction panels can be manufactured entirely industrially, in a very reliable manner, flexibly and accurately. The panels are lightweight and have a very high R-value (see https://en.wikipedia.org/wiki/Thermal_resistance), in which the processing steps, under the control of a digital construction data file, are performed by digitally controlled one or more processing devices, such as milling and/or cutting devices. Portions of the construction panel from which the covering layer has been removed by the processing devices (such as the sides of recesses for door frames and window frames etcetera and optional milled-out roof gutter slots etcetera), as well as portions of the construction panel of which the covering layer requires additional protection (in particularly portions below ground-level) are provided with rigid and highly reliable protective layers of polyurea, polyester or epoxy under control of the digital construction data file by means of digitally controlled spraying devices. For providing covering (cladding) elements such as a brick strip, use can be made of one or more delta robots, which can also be moved by means of the X-Y displacement system above the construction panel, controllable from the digital construction data file.

## Claims

1. Method for manufacturing a building panel intended for use as a self-supporting wall panel or roof panel having a high R-value, comprising the following steps:
- providing a digital construction data file with the desired construction data of the construction panel, obtained by scanning of an existing building and/or obtained from design;
- providing a device for manufacturing a construction panel comprising a base layer of foamed material of, for example, EPS, provided with a thin, rigid reinforcement cover layer on one side, hereinafter referred to as the first cover layer, and on the other side also provided with a thin, rigid reinforcement cover layer, hereinafter referred to as the second cover layer, wherein the layers are either directly applied to the base layer or by means of an intermediate layer of a material, which is suitable for screws,
- providing means, which are adapted for covering the transverse surfaces (side surfaces) of the construction panel, not being covered by the cover layers, by applying thereupon a layer of polyurea, polyester or epoxy.

2. Method according to claim 1, wherein means are provided that are arranged for applying covering elements, such as in particular brick strips, to the first cover layer in a predetermined pattern.

3. Method according to claim 2, wherein the means for applying the covering elements upon the first cover layer comprise one or more delta robots.

4. Method according to anyone of the preceding claims, comprising:
providing means that are arranged for providing one or more recesses in the material of the construction panel for, e.g., a door or a window, as well as providing means which are arranged for covering the transverse surfaces of the recesses by applying thereupon a layer of polyurea, polyester or epoxy.

5. Method according to claim 4, comprising:
providing means that are arranged for applying one or more recesses in the construction panel, which recesses, as seen in cross-section, are profiled for the purpose of receiving and/or supporting a construction element to be mounted or supported in said recess, such as a windowpane, panel or frame, as well as providing means adapted to cover the profiled transverse surfaces of said recesses by applying thereupon a layer of polyurea, polyester or epoxy.

6. Method according to anyone of the preceding claims, wherein the means for customizing the construction panel and/or for providing the one or more recesses, profiled or non-profiled, into the construction panel, comprise one or more robotic milling and/or cutting devices.

7. Method according to anyone of the preceding claims, comprising:
providing means adapted for slotting or milling of one or more portions of the outer surface of the base layer of foamed material and/or of the relevant cover layer, as well as providing means adapted for covering the surface of the one or more portions by applying thereto a layer of polyurea, polyester or epoxy.

8. Method according to anyone of the preceding claims, comprising:
providing means adapted for covering a portion of the construction panel intended to be installed below ground level by applying a layer of polyurea, polyester or epoxy.

9. Method according to anyone of the preceding claims, wherein the means for applying a layer of polyurea, polyester or epoxy onto the transverse surfaces of the construction panel, respectively, onto the transverse surfaces, profiled or non-profiled, of the recesses, respectively, onto the one or more slotted or milled portions of the outer surface of the base layer of foamed material and of the respective cover layer, respectively, onto a portion of the construction panel that is intended to be installed below ground level, comprise one or more robotic sprayer devices for polyurea, polyester or epoxy in a sprayable state.

10. Method according to anyone of the preceding claims, providing an X-Y displacement system above the construction panel to be manufactured, which system is controllable from the digital construction data file, the system being arranged to displace the one or more devices to the designated area of the construction panel for processing the construction panel, and/or to displace one or more devices to the designated area of the construction panel for applying the polyurea, polyester or epoxy, and/or to displace one or more devices to the designated area of the construction panel for applying covering elements to the construction panel.

## Patentansprüche

1. Verfahren zur Herstellung einer Bauplatte, die zur Verwendung als eine selbsttragende Wandplatte oder Dachplatte mit einem hohen R-Wert vorgesehen ist, umfassend die folgenden Schritte:
- Bereitstellen einer digitalen Baudatendatei mit den gewünschten Baudaten der Bauplatte, erhalten durch Scanning eines bestehenden Gebäudes und/oder erhalten durch Design;
- Bereitstellen einer Vorrichtung zur Herstellung einer Bauplatte umfassend eine Basisschicht aus Schaumstoffmaterial aus beispielsweise EPS, versehen mit einer dünnen starren Verstärkungsdeckschicht an einer Seite, nachstehend als die erste Deckschicht bezeichnet, und an der anderen Seite ebenfalls versehen mit einer dünnen starren Verstärkungsdeckschicht, nachstehend als die zweite Deckschicht bezeichnet, wobei die Schichten entweder direkt oder mithilfe einer Zwischenschicht aus einem Material, das für Schrauben geeignet ist, an die Basisschicht gebunden sind,
- Bereitstellen von Mitteln, die dafür ausgelegt sind, die Querflächen (Seitenflächen) der Bauplatte, die nicht von den Deckschichten bedeckt sind, durch Aufbringen einer Schicht von Polyharnstoff, Polyester oder Epoxy darauf zu bedecken.

2. Verfahren gemäß Anspruch 1, wobei Mittel bereitgestellt werden, die zum Aufbringen von Deckelementen, wie z.B. insbesondere Ziegelleisten, auf die erste Deckschicht in einer vorgegebenen Struktur beschaffen sind.

3. Verfahren gemäß Anspruch 2, wobei die Mittel zum Aufbringen der Deckelemente auf die erste Deckschicht einen oder mehrere Delta-Roboter umfassen.

4. Verfahren gemäß einem der vorstehenden Ansprüche, umfassend:
Bereitstellen von Mitteln, die zum Bereitstellen einer oder mehrerer Vertiefungen in dem Material der Bauplatte für z.B. eine Tür oder ein Fenster beschaffen sind, sowie Bereitstellen von Mitteln, die zum Bedecken der Querflächen der Vertiefungen durch Aufbringen einer Schicht von Polyharnstoff, Polyester oder Epoxy darauf beschaffen sind.

5. Verfahren gemäß Anspruch 4, umfassend:
Bereitstellen von Mitteln, die zum Anbringen einer oder mehrerer Vertiefungen in der Bauplatte beschaffen sind, wobei die Vertiefungen im Querschnitt gesehen profiliert sind, um ein Bauelement, das in der Vertiefung montiert oder davon getragen werden soll, wie z.B. eine Fensterscheibe, eine Platte oder einen Rahmen, aufzunehmen und/oder zu tragen, sowie Bereitstellen von Mitteln, die zum Bedecken der profilierten Querflächen der Vertiefungen durch Aufbringen einer Schicht von Polyharnstoff, Polyester oder Epoxy darauf beschaffen sind.

6. Verfahren gemäß einem der vorstehenden Ansprüche, wobei die Mittel zum bedarfsgerechten Gestalten der Bauplatte und/oder zur Bereitstellung der einen oder mehreren profilierten oder nicht profilierten Vertiefungen in der Bauplatte eines oder mehrere von Roboter-Fräs- und/oder Schneidvorrichtungen umfassen.

7. Verfahren gemäß einem der vorstehenden Ansprüche, umfassend:
Bereitstellen von Mitteln, die zum Kehlen oder Fräsen eines oder mehrerer Teile der Außenfläche der Basisschicht aus Schaumstoffmaterial und/oder der relevanten Deckschicht ausgelegt sind, sowie Bereitstellen von Mitteln, die zum Bedecken der Oberfläche des einen oder der mehreren Teile durch Aufbringen einer Schicht von Polyharnstoff, Polyester oder Epoxy darauf ausgelegt sind.

8. Verfahren gemäß einem der vorstehenden Ansprüche, umfassend:
Bereitstellen von Mitteln, die zum Bedecken eines Teils der Bauplatte, die zur Montage unter Bodenniveau vorgesehen sind, durch Aufbringen einer Schicht von Polyharnstoff, Polyester oder Epoxy ausgelegt sind.

9. Verfahren gemäß einem der vorstehenden Ansprüche, wobei das Mittel zum Aufbringen einer Schicht von Polyharnstoff, Polyester oder Epoxy auf die Querflächen der Bauplatte bzw. auf die profilierten oder nicht profilierten Querflächen der Vertiefungen bzw. auf die eine oder mehreren gekehlten oder gefrästen Teile der Außenfläche der Basisschicht aus Schaumstoffmaterial und der entsprechenden Deckschicht bzw. auf einen Teil der Bauplatte, der zur Montage unter Bodenniveau vorgesehen ist, eine oder mehrere Roboter-Sprühvorrichtungen für Polyharnstoff, Polyester oder Epoxy in einem sprühbaren Zustand umfasst.

10. Verfahren gemäß einem der vorstehenden Ansprüche, das ein X-Y-Verschiebungssystem über der herzustellenden Bauplatte bereitstellt, wobei das System durch die digitale Baudatendatei steuerbar ist, wobei das System dafür beschaffen ist, die eine oder mehreren Vorrichtungen an den vorgesehenen Bereich der Bauplatte zum Bearbeiten der Bauplatte zu verschieben und/oder um eine oder mehrere Vorrichtungen an den vorgesehenen Bereich der Bauplatte zum Aufbringen des Polyharnstoffs, Polyesters oder Epoxys zu verschieben und/oder um eine oder mehrere Vorrichtungen an den vorgesehenen Bereich der Bauplatte zum Aufbringen von Deckelementen auf die Bauplatte zu verschieben.

## Revendications

1. Procédé de fabrication d'un panneau de construction pour une utilisation comme panneau mural ou panneau de toit autoportant ayant une valeur R élevée, comprenant les étapes de :
- la fourniture d'un fichier numérique de données de construction contenant les données de construction souhaitées pour le panneau de construction, obtenues par balayage d'un bâtiment existant et/ou obtenues par conception ;
- la fourniture d'un dispositif de fabrication d'un panneau de construction comprenant une couche de base en matériau expansé, par exemple en EPS, pourvu d'une couche de revêtement de renforcement fine et rigide sur un côté, ci-après dénommée la première couche de revêtement, et sur l'autre côté également d'une couche de revêtement de renforcement fine et rigide, ci-après dénommée la seconde couche de revêtement, dans lequel les couches sont appliquées directement sur la couche de base ou au moyen d'une couche intermédiaire d'un matériau adapté aux vis,
- la fourniture de moyens adaptés pour recouvrir les surfaces transversales (surfaces latérales) du panneau de construction, non recouvertes par les couches de revêtement, en y appliquant une couche de polyurée, polyester ou époxy.

2. Procédé selon la revendication 1, dans lequel des moyens sont prévus, lesquels sont agencés pour appliquer des éléments de revêtement, tels que notamment des bandes de briques, sur la première couche de revêtement selon un motif prédéterminé.

3. Procédé selon la revendication 2, dans lequel les moyens d'application des éléments de revêtement sur la première couche de revêtement comprennent un ou plusieurs robots delta.

4. Procédé selon l'une quelconque des revendications précédentes, comprenant :
la fourniture de moyens agencés pour fournir un ou plusieurs évidements dans le matériau du panneau de construction pour, par exemple, une porte ou une fenêtre, ainsi que la fourniture de moyens agencés pour recouvrir les surfaces transversales des évidements en y appliquant une couche de polyurée, polyester ou époxy.

5. Procédé selon la revendication 4, comprenant :
la fourniture de moyens agencés pour appliquer un ou plusieurs évidements dans le panneau de construction, lesquels évidements, vus en coupe transversale, sont profilés dans le but de recevoir et/ou de soutenir un élément de construction à monter ou à soutenir dans ledit évidement, tel qu'une vitre, un panneau ou un cadre, ainsi que la fourniture de moyens adaptés pour recouvrir les surfaces transversales profilées desdits évidements en y appliquant une couche de polyurée, polyester ou époxy.

6. Procédé selon l'une quelconque des revendications précédentes, dans lequel les moyens permettant de personnaliser le panneau de construction et/ou de fournir le ou les plusieurs évidements, profilés ou non, dans le panneau de construction, comprennent un ou plusieurs dispositifs robotisés de fraisage et/ou de coupe.

7. Procédé selon l'une quelconque des revendications précédentes, comprenant :
la fourniture de moyens adaptés au rainurage ou au fraisage d'une ou plusieurs parties de la surface extérieure de la couche de base en matériau expansé et/ou de la couche de revêtement correspondante, ainsi que la fourniture de moyens adaptés pour recouvrir la surface de l'une ou des plusieurs parties en y appliquant une couche de polyurée, polyester ou époxy.

8. Procédé selon l'une quelconque des revendications précédentes, comprenant :
la fourniture de moyens adaptés pour recouvrir une partie du panneau de construction destinée à être installée sous le niveau du sol en appliquant une couche de polyurée, polyester ou époxy.

9. Procédé selon l'une quelconque des revendications précédentes, dans lequel les moyens d'application d'une couche de polyurée, polyester ou époxy sur les surfaces transversales du panneau de construction, respectivement sur les surfaces transversales, profilées ou non, des évidements, respectivement sur les parties rainurées ou fraisées de la surface extérieure de la couche de base en matériau expansé et de la couche de revêtement respective, respectivement, sur une partie du panneau de construction qui est destinée à être installée sous le niveau du sol, comprennent un ou plusieurs dispositifs de pulvérisation robotisés de polyurée, polyester ou époxy à l'état pulvérisable.

10. Procédé selon l'une quelconque des revendications précédentes, prévoyant un système de déplacement X-Y au-dessus du panneau de construction à fabriquer, lequel système peut être commandé à partir du fichier numérique de données de construction, le système étant agencé pour déplacer l'un ou les plusieurs dispositifs vers la zone désignée du panneau de construction pour traiter le panneau de construction, et/ou pour déplacer le ou les plusieurs dispositifs vers la zone désignée du panneau de construction pour appliquer la polyurée, le polyester ou l'époxy, et/ou pour déplacer un ou plusieurs dispositifs vers la zone désignée du panneau de construction pour appliquer des éléments de revêtement sur le panneau de construction.
